# FASCICULE DE BREVET EUROPEEN

(11) **EP 3 564 644 B1**
(45) Date de publication et mention de la délivrance du brevet: **17.02.2021**
(21) Numéro de dépôt: 19169099.9
(22) Date de dépôt: 12.04.2019
(51) Int. Cl.: G01M 3/20, G06F 3/01, G02B 27/01

(54) **MODULE DE DÉTECTION DE FUITES ET PROCÉDÉ DE CONTRÔLE DE L'ÉTANCHÉITÉ D'UN OBJET À TESTER PAR GAZ TRACEUR**
LECKERFASSUNGSMODUL UND VERFAHREN ZUR ÜBERPRÜFUNG DER DICHTIGKEIT EINES OBJEKTS MITTELS EINES TRACER-GASES
LEAK DETECTION MODULE AND METHOD FOR CONTROLLING THE SEALING OF AN OBJECT TO BE TESTED BY TRACER GAS

(30) Priorité: 02.05.2018 FR 1870521
(43) Date de publication de la demande: 06.11.2019
(73) Titulaire: Pfeiffer Vacuum, 74000 Annecy (FR)
(72) Inventeur: JOURDAN, Pascal, 74330 POISY (FR)
(74) Mandataire: Croonenbroek, Thomas Jakob

(56) Documents cités:
- WO-A1-2017/125327
- CN-B- 105 182 535
- DE-A1-102005 028 557
- FR-A1- 3 044 764
- JP-A- 2017 207 375
- US-A1- 2016 228 633

## Description

La présente invention concerne un module de détection de fuites pour le contrôle de l'étanchéité d'un objet à tester par gaz traceur. L'invention concerne également un procédé de contrôle de l'étanchéité d'un objet à tester par gaz traceur.

Une méthode connue pour contrôler l'étanchéité d'un objet consiste à réaliser un test dit « en reniflage » ou « en aspersion » de gaz traceur. Ces méthodes font appel à la détection du passage du gaz traceur à travers les éventuelles fuites de l'objet à tester.

L'état de l'art est également connu grâce à CN 105182535 B, DE 102005028557 A1, WO 2017/125327 A1 , FR 3044764 A1, US 2016/228633 A1 et JP 2017207375 A.

En mode reniflage, on recherche à l'aide d'un détecteur de fuites relié à une sonde de reniflage la présence éventuelle du gaz traceur autour d'un objet à tester rempli avec le gaz traceur généralement pressurisé. En mode aspersion, on asperge l'objet à tester de gaz traceur avec un pistolet d'aspersion, le volume intérieur de l'objet à tester étant relié à un détecteur de fuites. La recherche de fuites est réalisée en déplaçant la sonde de reniflage ou le pistolet d'aspersion autour de l'objet à tester, notamment au niveau des zones susceptibles de présenter des faiblesses d'étanchéité, tel qu'autour des joints d'étanchéité. Une augmentation du signal de concentration en gaz traceur mesuré est révélatrice de la présence d'une fuite à l'endroit où est positionnée la sonde.

Il n'est cependant pas toujours aisé pour l'utilisateur de réaliser une mesure.

En effet, en plus de la manipulation du pistolet d'aspersion ou de la sonde de reniflage, l'utilisateur peut également avoir à manipuler des accessoires, tels qu'un outil, une lampe de poche pour localiser les zones de test ou une télécommande pour contrôler le détecteur de fuites à distance. L'utilisateur peut en outre avoir besoin de ses mains pour son propre maintien lorsqu'il se retrouve dans une position inconfortable. On comprend alors qu'il n'est pas aisé pour l'utilisateur de manipuler tous ces éléments simultanément pour réaliser une recherche de fuites.

Un des buts de la présente invention est donc de proposer un module et un procédé de détection de fuites qui résolvent au moins en partie les inconvénients précités.

A cet effet, l'invention a pour objet un module de détection de fuites pour le contrôle de l'étanchéité d'un objet à tester par gaz traceur comportant un détecteur de fuites et une sonde manipulable par un utilisateur, caractérisé en ce qu'il comporte en outre une interface homme-machine comprenant un dispositif de reconnaissance vocale configuré pour reconnaitre une commande vocale de l'utilisateur commandant le module de détection de fuites. La commande vocale permet à l'utilisateur de commander facilement le module de détection de fuites, même à distance, sans avoir besoin d'immobiliser une main. Ses mains sont donc disponibles pour la manipulation de la sonde ou d'accessoires, ce qui facilite la recherche de fuites.

Selon un exemple de réalisation, le module de détection de fuites comporte en outre un dispositif de vision comprenant :
- une unité de traitement et d'affichage configurée pour communiquer avec le détecteur de fuites,
- un moyen de maintien configuré pour maintenir le dispositif de vision sur la tête de l'utilisateur, et
- une surface de visualisation fixée au moyen de maintien pour être placée dans le champ de vision de l'utilisateur, l'unité de traitement et d'affichage étant configurée pour afficher en réalité augmentée sur la surface de visualisation au moins une information relative à la détection de fuites,
- le dispositif de reconnaissance vocale étant configuré pour reconnaitre une commande vocale de l'utilisateur commandant le dispositif de vision.

Le dispositif de vision comporte par exemple au moins un dispositif de capture d'images, tel qu'une caméra ou un appareil photographique, configuré pour prendre des images dans le champ de vision de l'utilisateur.

Le dispositif de reconnaissance vocale peut être configuré pour reconnaitre une commande vocale de l'utilisateur commandant une prise d'image par le dispositif de capture d'images. L'image pouvant être prise comprend la surface de visualisation sur laquelle l'au moins une information relative à la détection de fuites est affichée en réalité augmentée.

L'information comprend par exemple au moins un signal représentatif de la concentration en gaz traceur mesurée par le détecteur de fuites.

Il est ainsi possible de commander vocalement la prise d'une ou plusieurs photos du test pour montrer d'une part, que la zone de test prédéfinie a bien été testée et pour montrer d'autre part, la mesure de concentrations en gaz traceur associée. Un certificat d'étanchéité associé à l'objet à tester peut ainsi être fourni à un client ou à un service de qualité, ce certificat prouvant que les zones de test ont bien été testées par l'utilisateur et que le niveau d'étanchéité est inférieur à un seuil de rejet prédéfini.

Le dispositif de reconnaissance vocale peut être configuré pour reconnaitre une commande vocale de l'utilisateur commandant le détecteur de fuites.

Le dispositif de reconnaissance vocale est par exemple configuré pour reconnaitre une commande vocale de l'utilisateur commandant le lancement d'une mesure de la concentration en gaz traceur représentative du taux de fuites de l'objet à tester par le détecteur de fuites et/ou commandant une réinitialisation du bruit de fond et/ou un lancement de calibration du détecteur de fuites.

La sonde peut être une sonde de reniflage reliée au détecteur de fuites.

La sonde peut être une soufflette d'aspersion destinée à être reliée à une source de gaz traceur.

L'invention a aussi pour objet un procédé de contrôle de l'étanchéité d'un objet à tester par gaz traceur au moyen d'un module de détection de fuites tel que décrit précédemment, caractérisé en ce que l'utilisateur commande vocalement le module de détection de fuites.

L'utilisateur commande par exemple vocalement le détecteur de fuites du module de détection de fuites.

Selon un exemple de réalisation, une information relative à la détection de fuites est affichée en réalité augmentée sur une surface de visualisation placée dans le champ de vision d'un utilisateur par un dispositif de vision porté sur la tête de l'utilisateur. L'utilisateur peut par exemple commander vocalement une prise d'image par le dispositif de capture d'images de la surface de visualisation sur laquelle l'au moins une information relative à la détection de fuites est affichée en réalité augmentée.

D'autres caractéristiques et avantages de l'invention ressortiront de la description suivante, donnée à titre d'exemple, sans caractère limitatif, en regard des dessins annexés sur lesquels:
La figure 1 montre une vue schématique d'un utilisateur coiffé d'un dispositif de vision, manipulant une sonde de reniflage reliée à un détecteur de fuites.
La figure 2 montre une vue schématique d'un exemple d'un détecteur de fuites.
La figure 3 montre une vue schématique d'un exemple de dispositif de vision.
La figure 4 montre une vue schématique d'un exemple de ce qui peut être vu par l'utilisateur portant le dispositif de vision de la figure 3 au cours d'une recherche de fuites.
La figure 5 montre une vue schématique d'un utilisateur utilisant un module de détection de fuites pour le contrôle de l'étanchéité d'un objet à tester par aspersion de gaz traceur.
La figure 6 montre un exemple de ce qui peut être vu par l'utilisateur au cours d'un contrôle de l'étanchéité par aspersion de gaz traceur.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On définit par « objet à tester », un objet ou une installation dont on souhaite contrôler l'étanchéité.

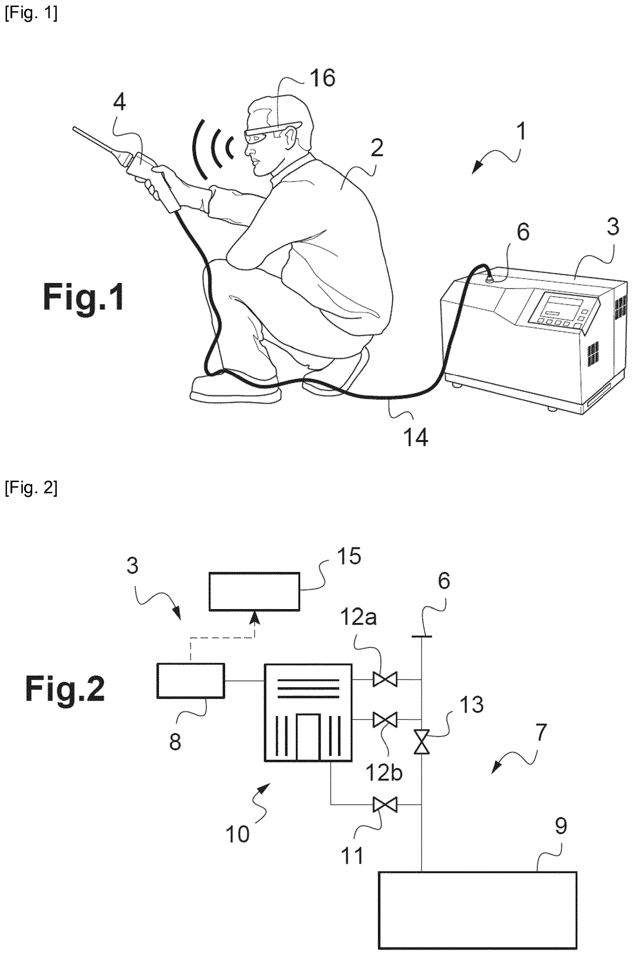

La figure 1 montre un exemple d'un module de détection de fuites 1 pour le contrôle de l'étanchéité d'un objet à tester par gaz traceur, utilisé par un utilisateur 2.

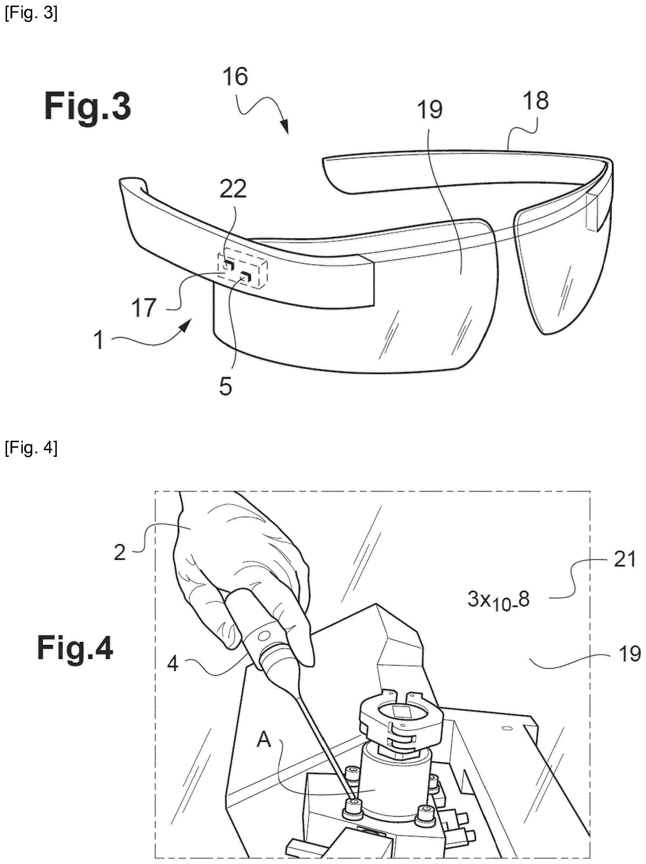

Le module de détection de fuites 1 comporte un détecteur de fuites 3, une sonde 4 manipulable par l'utilisateur 2 et une interface homme-machine I comportant un dispositif de reconnaissance vocale 5 configuré pour reconnaitre une commande vocale de l'utilisateur 2 commandant le module de détection de fuites 1 (Figure 3).

Le détecteur de fuites 3 comporte par exemple et comme représenté sur la Figure 2, une entrée de détection 6, un dispositif de pompage 7 et un détecteur de gaz 8.

Le dispositif de pompage 7 comporte par exemple au moins une pompe à vide primaire 9, telle qu'une pompe à membranes, et au moins une pompe à vide turbomoléculaire 10.

Le détecteur de gaz 8 est raccordé à la pompe à vide turbomoléculaire 10, par exemple à son aspiration. Le détecteur de gaz 8 comporte par exemple un spectromètre de masse. Le détecteur de gaz 8 permet notamment de déterminer une concentration en gaz traceur des gaz prélevés à l'entrée de détection 6.

Le refoulement de la pompe à vide turbomoléculaire 10 est raccordé à l'entrée de la pompe à vide primaire 9 via une première vanne d'isolation 11.

L'entrée de détection 6 du détecteur de fuites 3 est par exemple raccordée à un étage intermédiaire de la pompe à vide turbomoléculaire 10, via au moins une vanne de prélèvement 12a, 12b. Le dispositif de pompage 7 comporte par exemple au moins deux vannes de prélèvement 12a, 12b, chaque vanne 12a, 12b étant raccordée à un étage intermédiaire distinct de la pompe à vide turbomoléculaire 10 de manière à pouvoir adapter le flux de prélèvement au niveau du taux de fuites, la vanne de prélèvement 12a, 12b étant raccordée sur une dérivation d'une canalisation de la ligne de vide agencée entre l'entrée de détection 6 et une deuxième vanne d'isolation 13. La deuxième vanne d'isolation 13 est raccordée à la première vanne d'isolation 11 et à l'entrée de la pompe à vide primaire 9.

La sonde 4 présente un moyen de préhension lui permettant d'être manipulable par l'utilisateur 2 (Figure 1).

Dans le premier exemple de réalisation illustré sur la figure 1, la sonde 4 est une sonde de reniflage.

La sonde de reniflage est reliée à l'entrée de détection 6 du détecteur de fuites 3 par un tuyau flexible 14 de façon à aspirer les gaz environnants l'objet à tester rempli de gaz traceur. Une partie des gaz aspirés par le dispositif de pompage 7 est analysée par le détecteur de gaz 8 qui fournit une concentration en gaz traceur à une unité de contrôle 15 du détecteur 3 (visible sur la figure 2). Le dépassement d'un seuil maximal de gaz traceur est révélateur d'une fuite. On utilise généralement l'hélium ou l'hydrogène comme gaz traceur car ces gaz traversent les petites fuites plus aisément que les autres gaz, du fait de la petite taille de leur molécule et de leur grande vitesse de déplacement.

Le dispositif de reconnaissance vocale 5 (ou dispositif de reconnaissance automatique de la parole) comporte un microphone ou transducteur électroacoustique, capable de convertir un signal acoustique en signal électrique et un programme informatique permettant d'analyser la voix humaine captée au moyen du microphone pour la transcrire sous la forme d'un contenu, tel qu'un texte, exploitable par ordinateur ou contrôleur.

Le dispositif de reconnaissance vocale 5 peut, après apprentissage, être configuré pour identifier la voix de l'utilisateur, afin de pouvoir par exemple adapter la reconnaissance vocale à la langue, l'accent ou l'intonation de l'utilisateur 2.

Le dispositif de reconnaissance vocale 5 peut être configuré pour reconnaitre une commande vocale de l'utilisateur 2 commandant le détecteur de fuites 3 du module 1.

Par exemple, le dispositif de reconnaissance vocale 5 peut être configuré pour reconnaitre une commande vocale de l'utilisateur 2 commandant un lancement d'une mesure de la concentration en gaz traceur représentative du taux de fuites de l'objet à tester par le détecteur de fuites 3 et/ou une réinitialisation du bruit de fond et/ou un lancement d'une calibration du détecteur de fuites 3.

La réinitialisation du bruit de fond permet d'attribuer une valeur nulle à une mesure de la concentration en gaz traceur. Cela permet de déceler plus facilement la présence d'une fuite lorsque le niveau du bruit de fond est élevé sans attendre une baisse du niveau de gaz traceur et sans ventiler l'atmosphère.

Les commandes vocales peuvent être très simples, comme par exemple « réinitialisation du bruit de fond » pour commander une réinitialisation du bruit de fond ou « lancement d'une mesure » pour commander le lancement d'une mesure.

La commande vocale du détecteur de fuites 3 évite ainsi à l'utilisateur 2 de porter une télécommande lui immobilisant la main.

Le dispositif de reconnaissance vocale 5 peut être configuré pour reconnaitre des commandes vocales de l'utilisateur 2 commandant d'autres paramètres du détecteur de fuites 3, tels que le réglage du niveau sonore représentatif du taux de fuites mesuré par le détecteur de fuites 3. En effet, le détecteur de fuites 3 peut comporter un dispositif d'émission sonore, tel qu'un bipper ou un hautparleur, dont la fréquence augmente avec l'augmentation du signal de mesure représentatif du taux de fuites. Le réglage du niveau sonore du dispositif d'émission sonore par commande vocale peut permettre à l'utilisateur 2 d'augmenter ou baisser le son du dispositif d'émission sonore sans avoir à se déplacer.

Egalement, le dispositif de reconnaissance vocale 5 peut être configuré pour reconnaitre des commandes vocales de l'utilisateur 2 commandant le paramétrage des seuils de rejet du détecteur de fuites 3 pouvant déclencher une alerte.

Le programme informatique du dispositif de reconnaissance vocale 5 est par exemple exécuté par l'unité de contrôle 15 du détecteur de fuites 3 ou par un contrôleur ou processeur porté par l'utilisateur 2 ou par la sonde 4. Le microphone du dispositif de reconnaissance vocale 5 peut être agencé dans le détecteur de fuites 3 ou peut être porté par l'utilisateur 2 ou par la sonde 4 afin de mieux capter la voix de l'utilisateur 2.

Le dispositif de reconnaissance vocale 5 comporte en outre par exemple des moyens de communication sans fil, tel que WIFI ou Bluetooth, configurés pour communiquer sans liaison filaire avec des moyens de communication complémentaires de l'unité de contrôle 15 pour transmettre les commandes ou les contenus transcrits des signaux électriques ou les signaux électriques convertis des signaux acoustiques, à l'unité de contrôle 15.

Le dispositif de reconnaissance vocale 5 peut être configuré pour reconnaitre une commande vocale de l'utilisateur 2 commandant un dispositif de vision 16 du module 1 (Figure 1).

Le dispositif de vision 16 est porté par la tête de l'utilisateur 2.

Comme on peut mieux le voir sur la Figure 3, le dispositif de vision 16 comporte une unité de traitement et d'affichage 17, un moyen de maintien 18 et une surface de visualisation 19.

Le moyen de maintien 18 est configuré pour maintenir le dispositif de vision 16 sur la tête de l'utilisateur 2. Il comporte par exemple une monture destinée à reposer sur le nez de l'utilisateur et à prendre appui sur ses oreilles, telle qu'une monture de lunettes, ou comporte un arceau ajustable autour de la tête ou un casque ou un support formant serre-tête.

La surface de visualisation 19 est fixée au moyen de maintien 18 pour pouvoir être placée dans le champ de vision de l'utilisateur 2. La surface de visualisation 19 est formée par une surface transparente, en verre ou en plastique, permettant à l'utilisateur de voir à travers.

L'unité de traitement et d'affichage 17 comporte un ou plusieurs contrôleur(s) ou processeur(s) notamment configuré(s) pour communiquer avec l'unité de contrôle 15 du détecteur de fuites 3 (Figures 2 et 3). Elle comporte par exemple des moyens de communication sans fil, tel que WIFI ou Bluetooth, configurés pour communiquer sans liaison filaire avec des moyens de communication complémentaires de l'unité de contrôle 15. L'unité de traitement et d'affichage 17 peut donc ainsi envoyer ou recevoir des informations relatives à la détection de fuites. L'unité de traitement et d'affichage 17 est par exemple portée par le moyen de maintien 18, tel que par une branche du moyen de maintien 18.

L'unité de traitement et d'affichage 17 est en outre configurée pour afficher en réalité augmentée sur la surface de visualisation 19, au moins une information 21 relative à la détection de fuites. La réalité augmentée permet à l'utilisateur de voir les informations 21 relatives à la détection de fuites, superposées au réel.

L'information 21 comprend par exemple au moins un signal représentatif de la concentration en gaz traceur mesurée par le détecteur de fuites 3 (Figure 4). La concentration en gaz traceur est donc affichée dans le champ de vision de l'utilisateur 2 peu importe où il regarde. L'information 21 affichée suit ainsi le regard de l'utilisateur 2 même si celui-ci détourne la tête de l'écran du détecteur 3.

Le signal peut être affiché de différentes façons selon les souhaits de l'utilisateur 2. Le signal est par exemple affiché sous la forme d'une valeur numérique (Figure 4), de bargraphes (barres graphiques d'intensité) ou de graphique.

L'information 21 affichée peut indiquer si le signal dépasse un seuil de concentration en gaz traceur maximal, par exemple à l'aide d'un code couleur. Le signal peut ainsi changer de couleur lorsque la concentration en gaz traceur franchit un seuil de rejet prédéfini. Il est par exemple affiché en vert lorsque la mesure est inférieure au seuil et en rouge lorsque la mesure franchit le seuil.

L'information 21 peut comporter un signal représentatif d'un état de fonctionnement du détecteur de fuites 3, tel qu'un état d'alerte ou de mesure en cours, un défaut, une maintenance à réaliser ou une recommandation d'utilisation. L'information 21 de l'état de fonctionnement du détecteur de fuites 3 permet par exemple à l'utilisateur ne pouvant pas visualiser directement le détecteur de fuites 3, de s'assurer qu'il est bien en train de faire une mesure pour conclure à l'absence de fuites en présence d'un signal de mesure faible ou nul.

Selon un exemple de réalisation, le dispositif de vision 16 comporte au moins un dispositif de capture d'images 22, tel qu'une caméra ou un appareil photographique, configuré pour prendre des images dans le champ de vision de l'utilisateur 2 (Figure 3).

Le dispositif de reconnaissance vocale 5 peut être configuré pour reconnaitre une commande vocale de l'utilisateur 2 commandant une prise d'image par le dispositif de capture d'images 22 de la surface de visualisation 19 sur laquelle l'au moins une information 21 relative à la détection de fuites est affichée en réalité augmentée (Figures 3 et 4).

La commande vocale peut être très simple, comme par exemple « prendre une photo » pour déclencher la prise de photographie et la sauvegarde de l'image par le dispositif de capture d'images 22.

Le programme informatique du dispositif de reconnaissance vocale 5 est par exemple exécuté par l'unité de traitement et d'affichage 17. Le microphone du dispositif de reconnaissance vocale 5 peut être porté par le moyen de maintien 18.

Il est ainsi possible de commander vocalement la prise d'une ou plusieurs photos du test pour montrer d'une part, que la zone de test prédéfinie a bien été testée et pour montrer d'autre part, la mesure de concentrations en gaz traceur associée. Un certificat d'étanchéité associé à l'objet à tester A peut ainsi être fourni à un client ou à un service de qualité, ce certificat prouvant que les zones de test ont bien été testées par l'utilisateur 2 et que le niveau d'étanchéité est inférieur à un seuil de rejet prédéfini.

Nous allons maintenant décrire un exemple de fonctionnement du module de détection de fuites 1 et du procédé associé de contrôle de l'étanchéité d'un objet à tester A par gaz traceur (Figures 1 et 4).

L'objet à tester A est préalablement rempli en gaz traceur, par exemple pressurisé.

L'utilisateur 2 peut se faire identifier par le module de détection de fuites 1 par reconnaissance vocale.

Puis l'utilisateur 2 déplace l'embout de la sonde 4 sur les zones de test et peut, lorsqu'il est prêt, émettre une commande vocale commandant le détecteur de fuites 3 par exemple en lançant une mesure de la concentration en gaz traceur et/ou une réinitialisation du bruit de fond.

La sonde 4 reliée au détecteur de fuites 3 aspire les gaz environnants l'objet à tester A dans la zone de test. Une partie des gaz ainsi prélevés, contenant éventuellement le gaz traceur révélateur d'une fuite, est alors analysée par l'analyseur de gaz 8 qui fournit une mesure de la concentration en gaz traceur à l'unité de contrôle 15 du détecteur de fuites 3.

L'utilisateur 2 peut placer un dispositif de vision 16 sur sa tête pour voir la surface de visualisation 19 dans son champ de vision.

L'unité de contrôle 15 envoie alors la mesure de la concentration en gaz traceur, traitée ou non, à l'unité de traitement et d'affichage 17. L'unité de traitement et d'affichage 17 affiche une information 21 relative à la détection de fuites en réalité augmentée, telle que la mesure de concentration en gaz traceur sous forme d'une valeur numérique, sur la surface de visualisation 19 (Figure 4).

La mesure de la concentration en gaz traceur peut ainsi être affichée en temps réel dans le champ de vision de l'utilisateur 2. L'utilisateur 2 a ainsi accès à la mesure sans avoir besoin de détourner le regard de la zone de test et sans avoir à tenir un écran déporté.

Les valeurs de concentration en gaz traceur mesurées et la séquence associée d'opérations de mesure réalisées par l'utilisateur 2 peuvent être enregistrées.

L'utilisateur 2 peut émettre une commande vocale pour prendre une image par le dispositif de capture d'images 22, notamment de la surface de visualisation 19 sur laquelle l'au moins une information 21 relative à la détection de fuites est affichée en réalité augmentée.

La séquence d'opérations de mesure réalisée par l'utilisateur 2 sur l'objet à tester A peut ainsi être photographiée par une ou plusieurs photo(s) des tests réalisés sur l'objet à tester A. Ces résultats peuvent être associés à des numéros de série des objets à tester A, ce qui est particulièrement utile en production. Cela permet de centraliser tous les résultats et permet à l'utilisateur 2 de revenir ultérieurement sur un test réalisé.

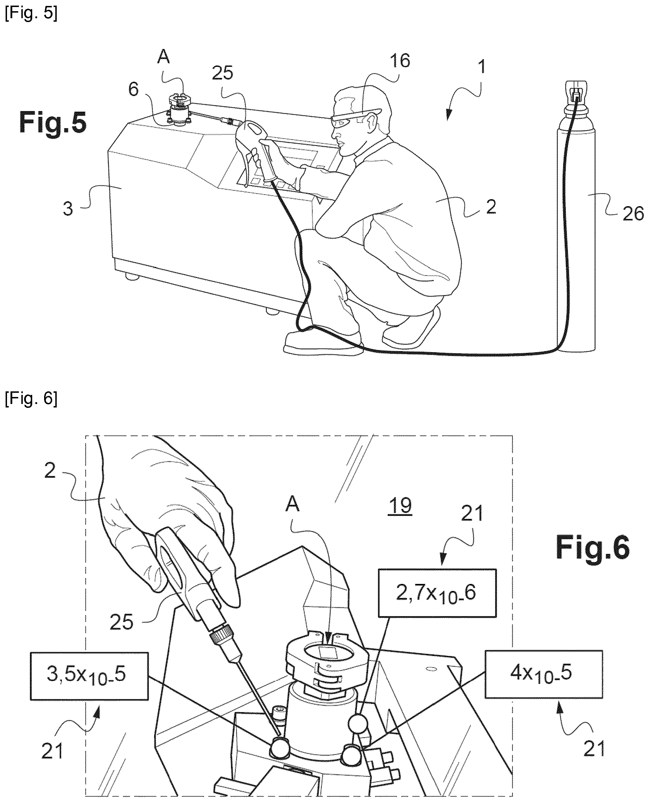

Les Figures 5 et 6 montrent un exemple de réalisation d'un contrôle de l'étanchéité d'un objet à tester par aspersion.

Cet exemple se différencie du précédent par le fait qu'ici, la sonde 25 est une soufflette d'aspersion reliée à une source de gaz traceur 26 de façon à souffler du gaz traceur autour de l'objet à tester A. L'objet à tester A est raccordé à l'entrée de détection 6 du détecteur de fuites 3 par lequel il est mis sous vide (Figures 2 et 5). En utilisation, l'utilisateur 2 asperge du gaz traceur autour de l'objet à tester A avec la sonde 25 (Figures 5 et 6).

Comme précédemment, l'utilisateur peut, lorsqu'il est prêt, commander vocalement le détecteur de fuites 3, en lançant par exemple une mesure de la concentration en gaz traceur et/ou une réinitialisation du bruit de fond.

Une partie des gaz prélevés par le dispositif de pompage 7 du détecteur de fuites 3, contenant éventuellement le gaz traceur révélateur d'une fuite, est alors analysée par l'analyseur de gaz 8 qui fournit une mesure de la concentration en gaz traceur à l'unité de contrôle 15 du détecteur de fuites 3 (Figure 2).

L'utilisateur 2 peut aussi placer le dispositif de vision 16 sur sa tête pour voir la surface de visualisation 19 dans son champ de vision (Figures 3 et 5).

L'unité de contrôle 15 envoie alors la mesure de la concentration en gaz traceur, traitée ou non, à l'unité de traitement et d'affichage 17. L'unité de traitement et d'affichage 17 affiche une information 21 relative à la détection de fuites en réalité augmentée, telle que la mesure de concentration en gaz traceur sous forme d'une valeur numérique, sur la surface de visualisation 19 (Figure 6).

Les valeurs de concentration en gaz traceur mesurées et la séquence associée d'opérations de mesure réalisées par l'utilisateur 2 peuvent être enregistrées.

Comme précédemment, l'utilisateur 2 peut commander vocalement de prendre une image par le dispositif de capture d'images 22 de la surface de visualisation 19 sur laquelle l'au moins une information 21 relative à la détection de fuites est affichée en réalité augmentée.

## Revendications

1. Module de détection de fuites (1) pour le contrôle de l'étanchéité d'un objet à tester (A) par gaz traceur comportant un détecteur de fuites (3) et une sonde (4 ; 25) manipulable par un utilisateur (2), **caractérisé en ce qu'**il comporte en outre une interface homme-machine (I) comprenant un dispositif de reconnaissance vocale (5) configuré pour reconnaitre une commande vocale de l'utilisateur (2) commandant le module de détection de fuites (1).

2. Module de détection de fuites (1) selon la revendication précédente, **caractérisé en ce qu'**il comporte en outre un dispositif de vision (16) comprenant :
- une unité de traitement et d'affichage (17) configurée pour communiquer avec le détecteur de fuites (3),
- un moyen de maintien (18) configuré pour maintenir le dispositif de vision (16) sur la tête de l'utilisateur (2), et
- une surface de visualisation (19) fixée au moyen de maintien (18) pour être placée dans le champ de vision de l'utilisateur (2), l'unité de traitement et d'affichage (17) étant configurée pour afficher en réalité augmentée sur la surface de visualisation (19) au moins une information (21) relative à la détection de fuites,
- le dispositif de reconnaissance vocale (5) étant configuré pour reconnaitre une commande vocale de l'utilisateur (2) commandant le dispositif de vision (16).

3. Module de détection de fuites (1) selon la revendication précédente, **caractérisé en ce que** le dispositif de vision (16) comporte au moins un dispositif de capture d'images (22), tel qu'une caméra ou un appareil photographique, configuré pour prendre des images dans le champ de vision de l'utilisateur (2).

4. Module de détection de fuites (1) selon la revendication précédente, **caractérisé en ce que** le dispositif de reconnaissance vocale (5) est configuré pour reconnaitre une commande vocale de l'utilisateur (2) commandant une prise d'image par le dispositif de capture d'images (22) de la surface de visualisation (19) sur laquelle l'au moins une information (21) relative à la détection de fuites est affichée en réalité augmentée.

5. Module de détection de fuites (1) selon l'une des revendications précédentes, **caractérisé en ce que** le dispositif de reconnaissance vocale (5) est configuré pour reconnaitre une commande vocale de l'utilisateur (2) commandant le détecteur de fuites (3).

6. Module de détection de fuites (1) selon la revendication précédente, **caractérisé en ce que** le dispositif de reconnaissance vocale (5) est configuré pour reconnaitre une commande vocale de l'utilisateur (2) commandant le lancement d'une mesure de la concentration en gaz traceur représentative du taux de fuites de l'objet à tester (A) par le détecteur de fuites (3) et/ou une réinitialisation du bruit de fond et/ou un lancement de calibration du détecteur de fuites (3).

7. Module de détection de fuites (1) selon l'une des revendications précédentes, **caractérisé en ce que** la sonde (4) est une sonde de reniflage reliée au détecteur de fuites (3).

8. Module de détection de fuites (1) selon l'une des revendications 1 à 6, **caractérisé en ce que** la sonde (25) est une soufflette d'aspersion destinée à être reliée à une source de gaz traceur (26).

9. Procédé de contrôle de l'étanchéité d'un objet à tester (A) par gaz traceur au moyen d'un module de détection de fuites (1) selon l'une des revendications précédentes, **caractérisé en ce que** l'utilisateur (2) commande vocalement le module de détection de fuites (1).

10. Procédé de contrôle de l'étanchéité d'un objet à tester (A) selon la revendication précédente, **caractérisé en ce que** l'utilisateur (2) commande vocalement le détecteur de fuites (3) du module de détection de fuites (1).

11. Procédé de contrôle de l'étanchéité d'un objet à tester (A) selon l'une des revendications 9 ou 10, **caractérisé en ce qu'**une information (21) relative à la détection de fuites est affichée en réalité augmentée sur une surface de visualisation (19) placée dans le champ de vision d'un utilisateur (2) par un dispositif de vision (16) porté sur la tête de l'utilisateur (2).

12. Procédé de contrôle de l'étanchéité d'un objet à tester (A) selon la revendication précédente, **caractérisé en ce que** l'utilisateur (2) commande vocalement une prise d'image par le dispositif de capture d'images (22) de la surface de visualisation (19) sur laquelle l'au moins une information (21) relative à la détection de fuites est affichée en réalité augmentée

13. Procédé de contrôle de l'étanchéité d'un objet à tester (A) selon l'une des revendications 11 ou 12, **caractérisé en ce que** l'information (21) comprend au moins un signal représentatif de la concentration en gaz traceur mesurée par le détecteur de fuites (3).

## Patentansprüche

1. Leckerfassungsmodul (1) zur Kontrolle der Dichtheit eines zu testenden Gegenstands (A) durch Spürgas, das einen Leckdetektor (3) und eine von einem Benutzer (2) handhabbare Sonde (4; 25) aufweist, **dadurch gekennzeichnet, dass** es außerdem eine Mensch-Maschine-Schnittstelle (I) aufweist, die eine Spracherkennungsvorrichtung (5) enthält, die konfiguriert ist, eine Sprachsteuerung des das Leckerfassungsmodul (1) steuernden Benutzers (2) zu erkennen.

2. Leckerfassungsmodul (1) nach dem vorhergehenden Anspruch, **dadurch gekennzeichnet, dass** es außerdem eine Sichtvorrichtung (16) aufweist, die enthält:
- eine Verarbeitungs- und Anzeigeeinheit (17), die konfiguriert ist, mit dem Leckdetektor (3) zu kommunizieren,
- eine Halteeinrichtung (18), die konfiguriert ist, die Sichtvorrichtung (16) auf dem Kopf des Benutzers (2) zu halten, und
- eine Anzeigefläche (19), die an der Halteeinrichtung (18) befestigt ist, um im Blickfeld des Benutzers (2) platziert zu werden, wobei die Verarbeitungs- und Anzeigeeinheit (17) konfiguriert ist, in erweiterter Realität auf der Anzeigefläche (19) mindestens eine Information (21) bezüglich der Leckerfassung anzuzeigen,
- wobei die Spracherkennungsvorrichtung (5) konfiguriert ist, eine Sprachsteuerung des die Sichtvorrichtung (16) steuernden Benutzers (2) zu erkennen.

3. Leckerfassungsmodul (1) nach dem vorhergehenden Anspruch, **dadurch gekennzeichnet, dass** die Sichtvorrichtung (16) mindestens eine Bildaufnahmevorrichtung (22) wie eine Kamera oder einen Fotoapparat aufweist, die konfiguriert ist, Bilder im Blickfeld des Benutzers (2) aufzunehmen.

4. Leckerfassungsmodul (1) nach dem vorhergehenden Anspruch, **dadurch gekennzeichnet, dass** die Spracherkennungsvorrichtung (5) konfiguriert ist, eine Sprachsteuerung des Benutzers (2) zu erkennen, die eine Bildaufnahme der Anzeigefläche (19), auf der die mindestens eine Information (21) bezüglich der Leckerfassung in erweiterter Realität angezeigt ist, durch die Bildaufnahmevorrichtung (22) steuert.

5. Leckerfassungsmodul (1) nach einem der vorhergehenden Ansprüche, **dadurch gekennzeichnet, dass** die Spracherkennungsvorrichtung (5) konfiguriert ist, eine Sprachsteuerung des den Leckdetektor (3) steuernden Benutzers (2) zu erkennen.

6. Leckerfassungsmodul (1) nach dem vorhergehenden Anspruch, **dadurch gekennzeichnet, dass** die Spracherkennungsvorrichtung (5) konfiguriert ist, eine Sprachsteuerung des Benutzers (2) zu erkennen, die den Start einer Messung der für die Leckrate des zu testenden Gegenstands (A) repräsentativen Spürgaskonzentration durch den Leckdetektor (3) und/oder einen Reset des Hintergrundrauschens und/oder einen Start der Kalibrierung des Leckdetektors (3) steuert.

7. Leckerfassungsmodul (1) nach einem der vorhergehenden Ansprüche, **dadurch gekennzeichnet, dass** die Sonde (4) eine mit dem Leckdetektor (3) verbundene Schnüffelsonde ist.

8. Leckerfassungsmodul (1) nach einem der Ansprüche 1 bis 6, **dadurch gekennzeichnet, dass** die Sonde (25) ein Sprühzerstäuber ist, der dazu bestimmt ist, mit einer Spürgasquelle (26) verbunden zu werden.

9. Verfahren zur Kontrolle der Dichtheit eines zu testenden Gegenstands (A) durch Spürgas mittels eines Leckerfassungsmoduls (1) nach einem der vorhergehenden Ansprüche, **dadurch gekennzeichnet, dass** der Benutzer (2) das Leckerfassungsmodul (1) per Sprache steuert.

10. Verfahren zur Kontrolle der Dichtheit eines zu testenden Gegenstands (A) nach dem vorhergehenden Anspruch, **dadurch gekennzeichnet, dass** der Benutzer (2) den Leckdetektor (3) des Leckerfassungsmoduls (1) per Sprache steuert.

11. Verfahren zur Kontrolle der Dichtheit eines zu testenden Gegenstands (A) nach einem der Ansprüche 9 oder 10, **dadurch gekennzeichnet, dass** eine Information (21) bezüglich der Leckerfassung in erweiterter Realität auf einer Anzeigefläche (19) angezeigt wird, die durch eine auf dem Kopf des Benutzers (2) getragene Sichtvorrichtung (16) im Blickfeld eines Benutzers (2) platziert wird.

12. Verfahren zur Kontrolle der Dichtheit eines zu testenden Gegenstands (A) nach dem vorhergehenden Anspruch, **dadurch gekennzeichnet, dass** der Benutzer (2) per Sprache eine Bildaufnahme der Anzeigefläche (19), auf der die mindestens eine Information (21) bezüglich der Leckerfassung in erweiterter Realität angezeigt ist, durch die Bildaufnahmevorrichtung (22) steuert.

13. Verfahren zur Kontrolle der Dichtheit eines zu testenden Gegenstands (A) nach einem der Ansprüche 11 oder 12, **dadurch gekennzeichnet, dass** die Information (21) mindestens ein für die vom Leckdetektor (3) gemessene Spürgaskonzentration repräsentatives Signal enthält.

## Claims

1. Leak detection module (1) for checking the seal of an object (A) to be tested using a tracer gas, including a leak detector (3) and a probe (4 ; 25) that can be manipulated by a user (2), **characterized in that** it further includes a human-machine interface (I) including a voice recognition device (5) configured to recognize a voice command from the user (2) controlling the leak detection module (1).

2. Leak detection module (1) according to the preceding claim, **characterized in that** it further includes a vision device (16) comprising:
- a processor and display unit (17) configured to communicate with the leak detector (3),
- a retaining means (18) configured to retain the vision device (16) on the head of the user (2), and
- a viewing surface (19) fixed to the retaining means (18) to be placed in the field of view of the user (2), the processor and display unit (17) being configured to display in augmented reality on the viewing surface (19) at least one item of information (21) relating to leak detection,
the voice recognition device (5) being configured to recognize a voice command from the user (2) controlling the vision device (16).

3. Leak detection module (1) according to the preceding claim, **characterized in that** the vision device (16) includes at least one image capture device (22) such as a video camera or a still camera configured to capture images in the field of view of the user (2).

4. Leak detection module (1) according to the preceding claim, **characterized in that** the voice recognition device (5) is configured to recognize a voice command from the user (2) commanding image capture by the image capture device (22) of the viewing surface (19) on which the at least one item of information (21) relating to leak detection is displayed in augmented reality.

5. Leak detection module (1) according to any one of the preceding claims, **characterized in that** the voice recognition device (5) is configured to recognize a voice command from the user (2) controlling the leak detector (3).

6. Leak detection module (1) according to the preceding claim, **characterized in that** the voice recognition device (5) is configured to recognize a voice command from the user (2) commanding the starting of a measurement of the tracer gas concentration representing the rate of leakage from the object (A) to be tested by the leak detector (3) and/or reinitialization of the background noise and/or starting of calibration of the leak detector (3).

7. Leak detection module (1) according to any one of the preceding claims, **characterized in that** the probe (4) is a sniffer probe connected to the leak detector (3) .

8. Leak detection module (1) according to any one of Claims 1 to 6, **characterized in that** the probe (25) is a spray blower intended to be connected to a source (26) of tracer gas.

9. Method of checking the seal of an object (A) to be tested using a tracer gas and by means of a leak detection module (1) according to any one of the preceding claims, **characterized in that** the user (2) controls the leak detection module (1) by voice.

10. Method according to the preceding claim for checking the seal of an object (A) to be tested, **characterized in that** the user (2) controls the leak detector (3) of the leak detection module (1) by voice.

11. Method according to either one of Claims 9 or 10 for checking the seal of an object (A) to be tested, **characterized in that** an item of information (21) relating to leak detection is displayed in augmented reality on a viewing surface (19) placed in the field of view of a user (2) by a vision device (16) worn on the head of the user (2).

12. Method according to the preceding claim for checking the seal of an object (A) to be tested, **characterized in that** the user (2) commands by voice the capture by the image capture device (22) of an image of the viewing surface (19) on which the at least one item of information (21) relating to leak detection is displayed in augmented reality.

13. Method according to either one of Claims 11 or 12 for checking the seal of an object (A) to be tested, **characterized in that** the item of information (21) includes at least one signal representing the tracer gas concentration measured by the leak detector (3).
